# EUROPEAN PATENT SPECIFICATION

(11) **EP 1 425 520 B1**
(45) Date of publication and mention of the grant of the patent: **22.12.2004**
(21) Application number: 01976611.2
(22) Date of filing: 14.09.2001
(51) Int. Cl.: F16D 65/095

(54) **RETAINING STRUCTURE FOR PAD HOLDING PINS OF DISC BRAKES**
BEFESTIGUNGSSICHERUNG FÜR HALTESTIFTE VON SCHEIBENBREMSBELÄGEN
STRUCTURE DE RETENUE POUR AXES DE MAINTIEN DE PLAQUETTES DE FREINS A DISQUES

(43) Date of publication of application: 09.06.2004
(73) Proprietor: Freni Brembo S.p.A., 24035 Curno (Bergamo) (IT)
(72) Inventor: REGAZZONI, Mattia, I-24010 Ponteranica (IT); GHERARDI, Pierangelo, I-24019 Zogno (IT); CRIPPA, Cristian, I-24030 Almenno San Salvatore (IT); CASTELLANA, Mirko, I-24126 Bergamo (IT)
(74) Representative: Vittorangeli, Lucia
(86) International application number: PCT/IT2001/000480
(87) International publication number: WO 2003/025414

(56) References cited:
- DE-C- 853 227
- US-A- 2 255 217
- US-A- 3 450 234
- US-A- 3 980 160
- US-A- 5 769 470

## Description

The subject of the present invention is a disk brake for a vehicle.

As is known, a disk brake comprises a disk mounted on the hub of a wheel of the vehicle and a caliper arranged astride the disk. The caliper generally comprises a caliper body which houses the pads, and means for urging the pads against the disk in order to bring about the braking action on the vehicle.

In disk brakes of the type described briefly above, it is known to support the pads by means of pins housed in suitable seats formed in the caliper body and extending through suitable holes provided in the plates which support the friction linings of the pads.

In order to restrain the pins axially relative to the caliper body, it is known to use at least two possible methods, as described below.

In a first case, the axial restraint of the pins is achieved by means of split pins having at least one arm inserted in a suitable transverse hole of the pin.

In a second case, as known for example from US-A-3 980 160, the axial restraint of the pins is achieved by the provision of a substantially "barrel"-shaped resilient element associated with an end of the pin, in a manner such that, in operation, the element is engaged in one of the seats of the caliper body by friction.

Both of the methods described above satisfy the requirement to achieve quick fitting of the pins, and hence of the pads, on the caliper body.

However, it should be borne in mind that neither of the above-described methods is free of disadvantages, as will be described below.

In the first case, that is, when the pins for supporting the pads are restrained on the caliper body by split pins and, in racing applications in particular, the split pin may not be repositioned or may be repositioned incorrectly after the pins have been removed in order to replace the pads.

This inevitably results in the pin slipping out of its seats in the caliper body and hence in the loss of the pads associated therewith, with the serious consequence of loss of the braking action.

In the second case, that is, when the pins supporting the pads are restrained on the caliper body by means of "barrel"-shaped resilient elements, the constructional clearances of the seat of the pin which houses the resilient element are such as to allow the pin to move axially.

When the vehicle is in use, these axial movements result in undesired and annoying noisiness of the brake.

The aim of the present invention is therefore to devise and to provide a disk brake which satisfies the above-mentioned requirement and at the same time overcomes the disadvantages mentioned with reference to the prior art.

This object is achieved by means of a disk brake according to Claim 1.

Further characteristics and the advantages of the disk brake according to the invention will become clear from the following description of preferred embodiments, given by way of non-limiting example with reference to the appended drawings, in which:
Figure 1 is a partially-sectioned view of a possible embodiment of a disk brake according to the present invention,
Figure 2 is a front view of the support pin of the pads of the disk brake of Figure 1,
Figure 3 shows the detail III of Figure 2,

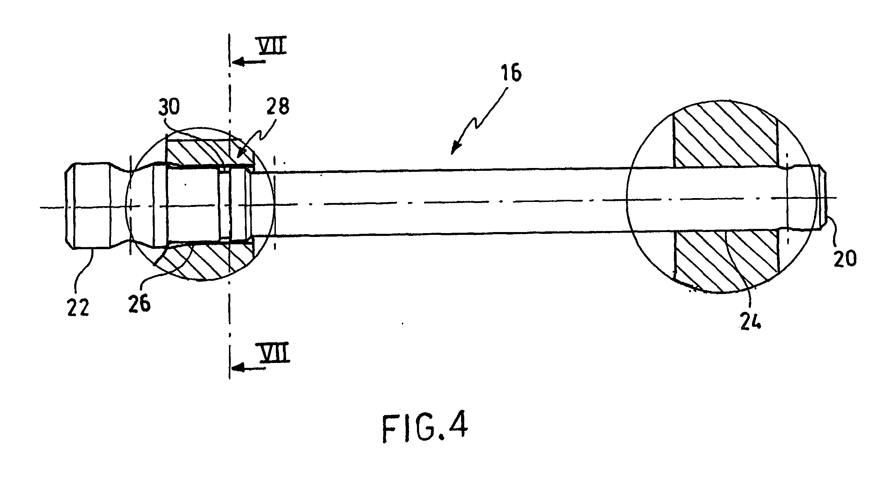

Figure 4 shows an enlarged detail of Figure 1 in which some elements have been omitted to show others,
Figure 5 shows a section through the caliper body of the brake of Figure 1, taken in a plane extending through the axis of a pad-support pin,
Figure 6 shows the detail VI of Figure 5 relating to one of the seats of the caliper body, on an enlarged scale,
Figure 7 shows a partial and enlarged cross-section taken on the line VII-VII of Figure 4,
Figure 8 shows a partial section through a caliper body of a disk brake according to one possible embodiment,
Figure 9 shows a partial section through a caliper body of a disk brake according to a further possible embodiment, and
Figure 10 shows a partial section through a caliper body of a disk brake according to a further possible embodiment.

With reference to the above-mentioned drawings, a disk brake for a vehicle according to the present invention is generally indicated 10.

A disk brake comprises, amongst other things, a disk 12 mounted on a hub of a vehicle wheel and a caliper body 14 mounted on a non-rotating portion, for example, the suspension, so as to be arranged astride the disk 12.

The caliper body 14 houses, transversely relative to the disk 12, pins 16 which extend along longitudinal axes 18. In particular, each pin 16 has ends 20 and 22 which can be housed in respective seats 24 and 26 formed in the caliper body 14.

The pins 16 support pads 27 and, in particular, extend through holes formed in plates 27a disposed on opposite sides of the disk 12. Each plate 27a supports a respective friction lining 27b of the pad 27 which is acted on by thrust means, which are known and are therefore not described in detail, and which operate on the pads simultaneously, pressing them against the disk and exerting the braking force on the vehicle.

Each pad-support pin 16 is restrained on the caliper body by restraining means 28 which advantageously comprise a resilient ring 30 fitted on the pin and interacting with one of the seats 24, 26 of the caliper body 14.

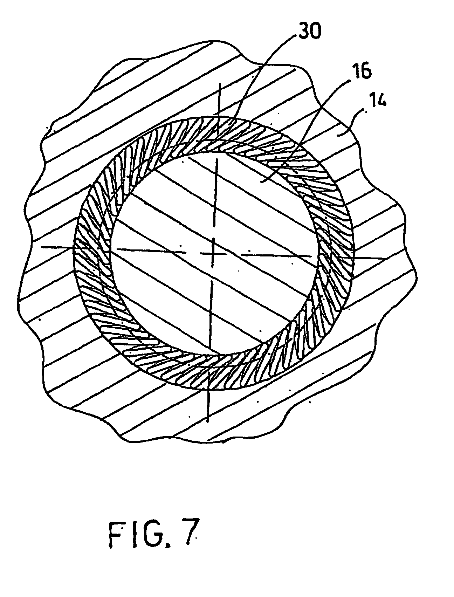

According to one possible embodiment, the resilient ring 30 comprises a wire which is wound in a spiral and is closed onto itself at least once. An example of a resilient ring 30 is shown in greater detail in Figure 7. According to this embodiment, the resilient ring 30 is formed by a wire which is wound in a spiral and the ends of which are joined together to form a closed loop.

According to one possible embodiment of the invention, the resilient ring 30 is housed in an annular seat 32 formed in a portion of the pin 16. The annular seat 32 may be formed in the vicinity of one of the ends 20, 22 of the pin 16.

An advantageous embodiment provides for the depth (in a radial direction relative to the pin) of the annular seat 32 to be about 0.36-0.4 mm and for its length (in an axial direction relative to the pin) to be about 0.84-0.91 mm. The width of the spiral with the coils free (the dimension along the radial direction of the pin) is advantageously arranged to be about 0.64 mm so that the resilient ring 30 projects from the annular seat 32 by about 0.24-0.28 mm. In particular, the ratio between the projecting portion of the resilient ring 30 and the width of the spiral with the coils free is advantageously between 0.35 and 0.45.

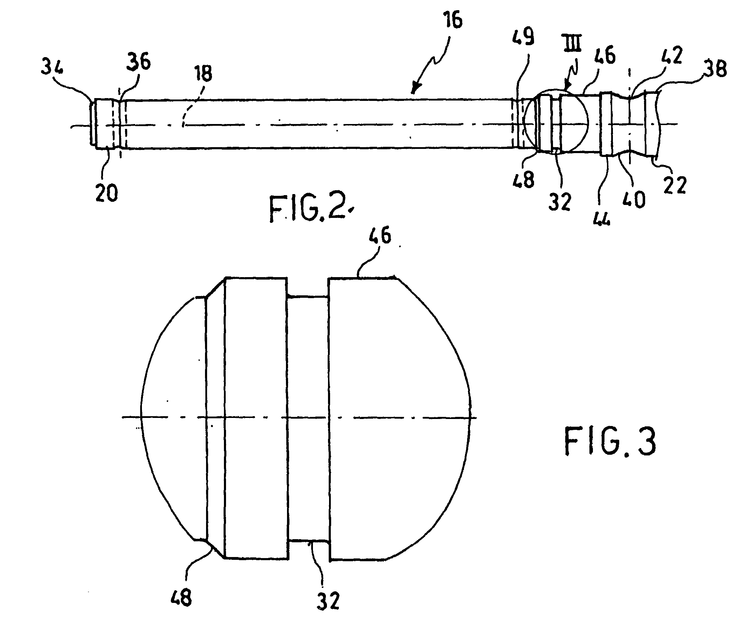

Figure 2 shows a possible embodiment of a support pin 16 according to the present invention.

The pin 16 has a substantially axially symmetrical structure with respect to the longitudinal axis 18. The end 20 or tip of the pin has a tapered surface 34, preferably chamfered at 45°, to facilitate the fitting of the pin, and a transverse hole 36.

The opposite end 22, which is also defined as the head of the pin, comprises, starting from the end portion of the pin, a first cylindrical portion 38, a concave portion 40 provided with a transverse hole 42, an annular projection 44 which delimits the concave portion 40, and a second cylindrical portion 46 in which the annular seat 32 is formed. The second cylindrical portion 46 terminates in a connecting surface 48, preferably inclined at 45°. Figure 2 also shows a further transverse hole 49.

Figure 3 shows the detail III of Figure 2, which corresponds to the portion of the pin 16 which comprises the annular seat 32.

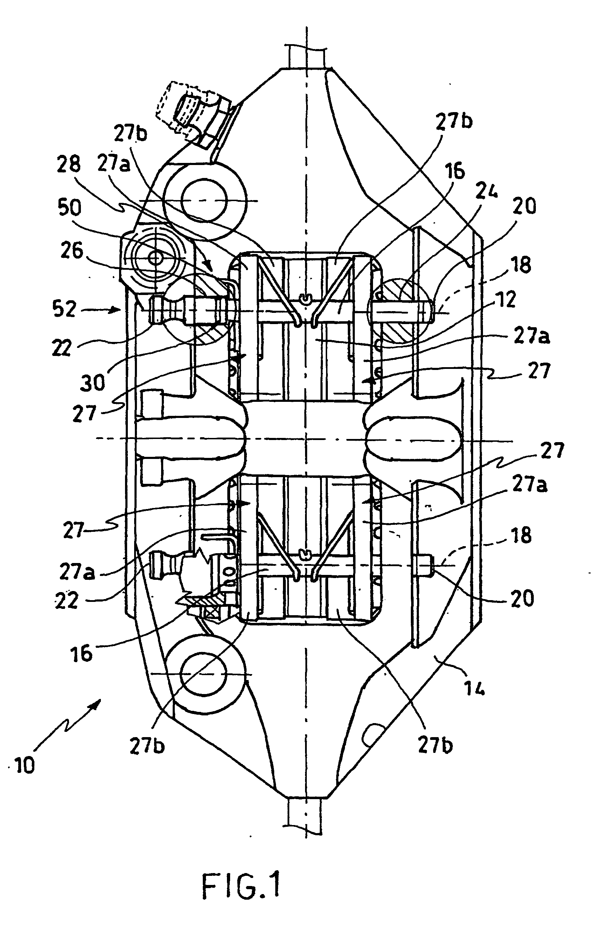

The pad-support pin 16 according to the present invention and, in particular, the means 28 for restraining it on the caliper body 14, also comprise further restraining elements which, according to one possible embodiment shown in Figure 1, provide for a split pin 50 conventionally inserted with at least one arm in one of the transverse holes of the pin. This transverse hole may be either the transverse hole 36 formed in the tip or end 20 of the pin 16, or the transverse hole 49 formed in the head or end 22 of the pin 16, as shown in Figure 1.

According to one possible embodiment, at least one of the seats 24, 26 of the caliper body 14 may be shaped as follows.

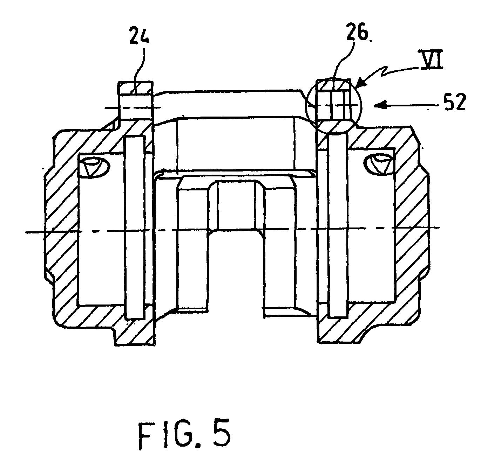

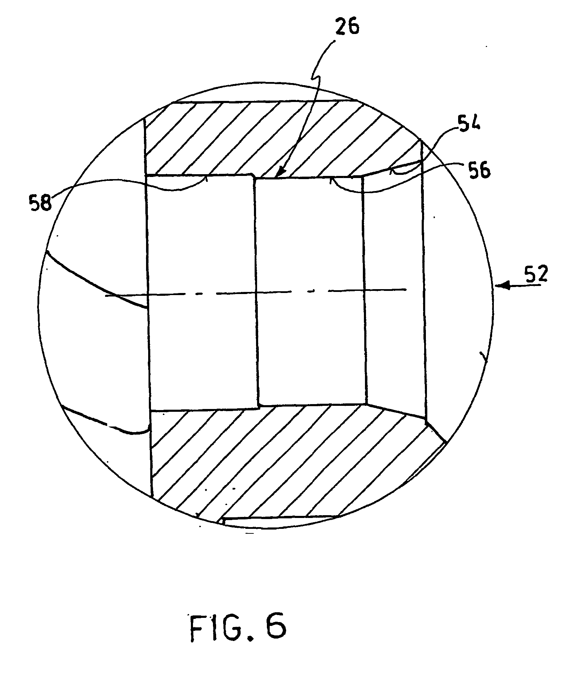

Figure 6 shows the detail VI of Figure 5 on an enlarged scale and shows a possible configuration of the seat 26 which houses the end 22 or head of the pin 16 and, in particular, the portion in which the annular seat 32 and the resilient ring 30 are provided. In the embodiment shown in Figure 6, the seat described corresponds to the seat indicated 26 which houses the head of the pin 16. When, on the other hand, the resilient ring 30 is provided on the tip of the pin, the configuration shown in Figure 6 will be that of the corresponding seat, that is, the seat indicated 24.

Starting from the outer side of the caliper body 14 and in a direction 52 corresponding to the direction in which the pad-support pin 16 is fitted, the seat 26 comprises an outwardly chamfered portion 54, a first cylindrical portion 56, and a second cylindrical portion 58 having a larger diameter than the cylindrical portion 56.

In the embodiment of Figure 6, the change between the first cylindrical portion 56 and the second cylindrical portion 58 takes place by means of a step corresponding to the difference in diameter between the two portions.

When the pin 16 is inserted in the seats 24 and 26 of the caliper body 14 in the direction 52, the resilient ring 30 with which the pin is provided passes through the first cylindrical portion 56 which causes a predetermined flexure of the coils equal to about 25%. This means that the resilient ring 30 is influenced resiliently by the.walls of the first portion 56 of the seat during the fitting of the pin 16.

When the resilient ring 30 is disposed in the region of the second cylindrical portion 58 having a larger diameter, the coils expand radially until they interact with the walls of the second cylindrical portion 58 of the seat 26 and the resilient ring 30 is snap-housed in the portion 58. In this condition, the coils may still have a flexure of about 10-15% or may be in the rest condition. In the first case, they help to stabilize the position of the pin in the seats during the operation of the vehicle.

Even if the split pin 50 is not fitted, the resilient ring 30 nevertheless restrains the pin 16 firmly in the seats in the caliper body 14.

The pin 16 is in fact prevented from slipping out of its seat, that is, the flexible resilient ring 30 is prevented from moving from the second cylindrical portion 58 to the first cylindrical portion 56 of smaller diameter, in the opposite direction to the direction 52, owing to the fact that the force necessary to flex the coils of the resilient ring again is never reached in operative conditions.

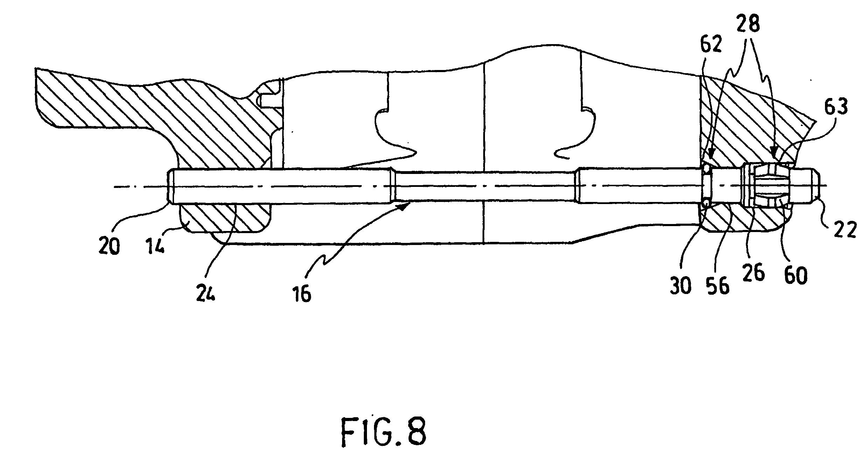

According to one possible embodiment, the pad-support pin 16 comprises further restraining elements in the form of "barrel"-shaped resilient elements 60 which engage in one of the seats of the caliper body 14 by friction. As shown in Figures 8 to 10, the "barrel"-shaped resilient element 60 is mounted on the end 22 or head of the pin 16.

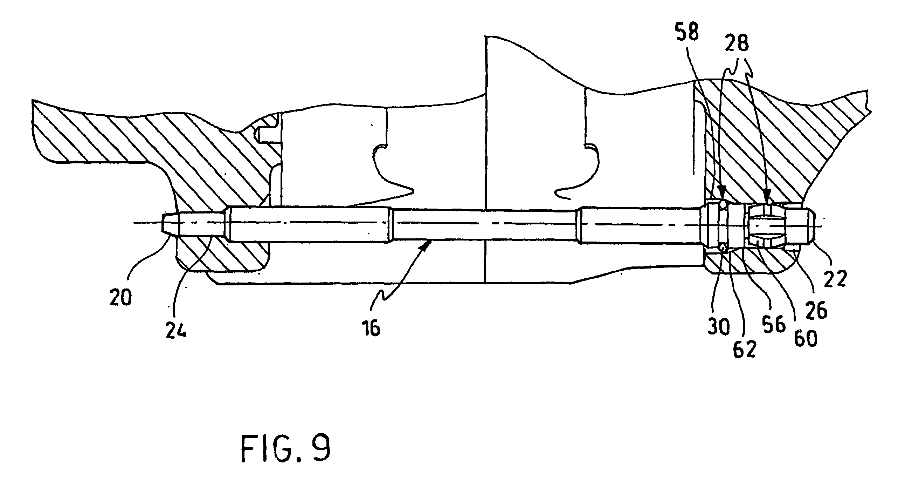

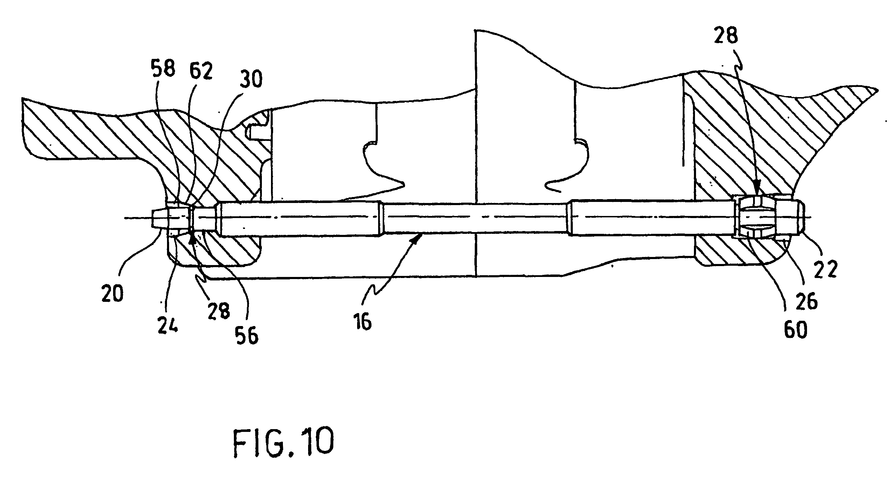

In this embodiment, the flexible resilient ring 30 may be housed either on the same end 22 of the pin 16 which houses the "barrel"-shaped resilient element 60 (Figures 8 and 9), or on the opposite end 20 (Figure 10).

According to one possible embodiment, the seat of the caliper body 14 which houses the end of the pin 16 on which the flexible resilient ring 30 is fitted comprises an abutment portion 62 disposed downstream of the first cylindrical portion 56 in the direction 52 of fitting of the pin 16. The flexible resilient ring 30 reacts against this abutment portion 62.

In Figure 8, the seat 26 provides a portion 63 for housing the "barrel"-shaped element, the first cylindrical portion 56 and the abutment portion 62, which represents a portion having diameters larger than the diameter of the first cylindrical portion 56. In Figure 9, the seat 26 provides both the first cylindrical portion 56 and the second cylindrical portion 58, between which the abutment portion 62 is interposed and, in this embodiment, also represents a portion having diameters larger than the diameter of the first cylindrical portion 56.

In Figure 10, the seat 26 is shaped for housing the "barrel"-shaped element 60 and the seat 24 provides both the first cylindrical portion 56 and the second cylindrical portion 58, between which the abutment portion 62 is interposed and, in this embodiment, also represents a portion having diameters larger than the diameter of the first cylindrical portion 56.

In the embodiments of Figures 8 and 9, when the pin 16 is mounted on the caliper body 14, the resilient ring 30 with which it is provided is arranged reacting against the abutment portion 62 of the seat 26. In this condition, the flexible resilient ring 30 keeps the end of the pin 16 constantly in abutment with the resilient restraining element 60 (the "barrel"-shaped element) thus preventing axial movements of the pin.

The foregoing also occurs in the embodiment of Figure 10, when the pin 16 is mounted on the caliper body 14. In this embodiment, the resilient ring 30 is arranged reacting against the abutment portion 62 of the seat 24, keeping the end of the pin 16 constantly in abutment with the resilient restraint element 60 and preventing axial movements of the pin.

In the case of the "barrel"-shaped element 60 also, when the pin 16 is inserted in the seats 24 and 26 of the caliper body 14 in the direction 52, the resilient ring 30 with which the pin is provided passes through the first cylindrical portion 56 which brings about a predetermined flexure of the coils, equal to approximately 25%. This means that the resilient ring 30 is influenced resiliently by the walls of the first portion 56 of the seat during the fitting of the pin 16.

When the resilient ring 30 is disposed in the region of the abutment portion 62, which constitutes a portion having transverse dimensions larger than the first portion 56, the coils expand radially until they interact with the walls of the abutment portion 62. In this condition, the coils may still have a flexure equal to about 10-20%, helping to stabilize the position of the pin in the seats when the vehicle is in operation.

It can be appreciated from the foregoing that the provision of a flexible resilient element as described above permits the introduction of a restraining means which, alone, can prevent the pin 16 from slipping out or, in conjunction with other restraint means, can help to restrain the pin in its seats, becoming a safety element.

This characteristic limits the risks connected with the replacement of the pads during which, when the pins are refitted, particularly in vehicles for sports applications, the split pin is not also refitted.

Moreover, by giving rise to a secure and stable restraint of the pin, particularly axially, the resilient ring 30 enables the pin to be kept in abutment, preventing axial movements thereof and consequently thus eliminating the noisiness of the brake due to the movements of the pin 16.

In addition to the foregoing, a further advantage is achieved in particular by the configuration which provides for the resilient ring 30 fitted on the tip or end 20 of the pin. In this case, simply by arranging for the two seats 24 and 26 to be similar, that is, to have respective first portions and second portions having transverse dimensions larger than the first portions, it is in fact possible to slip the pin out of the caliper body even only partially. In fact, the tip of the pin provided with the resilient ring 30 is slipped out of the seat 24 but not out of the seat 26 so that the pin remains temporarily anchored to the caliper body 14, without the need to be replaced, facilitating dismantling and reassembly operations.

Clearly, other variants and/or additions may be provided for the embodiments described and illustrated above.

For example, the split pin 50 provided in the case of the drawing of Figure 1 may equally well be mounted in the vicinity of the head or of the tip of the pin 16.

Instead of being housed in an annular seat formed in the pin, the flexible resilient ring 30 may be housed in a seat in the caliper body 14. The portion projecting from the seat may advantageously have the same proportions as described above.

In order to satisfy contingent and specific requirements, a person skilled in the art may apply to the above-described preferred embodiments of the pin and of the caliper body, many modifications adaptations and replacements of elements with other functionally equivalent elements without, however, departing from the scope of the appended claims.

## Claims

1. A disk brake (10) comprising a disk (12), a caliper body (14), a pin (16) for supporting pads (27), the pin (16) having at least ends (20, 22) which can be housed in seats (24, 26) of the caliper body (14), and means (28) for restraining the pin (16) on the caliper body (14), **characterized in that** the restraining means (28) comprise at least one flexible resilient ring (30) which can be fitted on the pin (16) and which is formed by a wire closed onto itself at least once and extending, wound in a spiral, forming the resilient ring, the spiral having dimensions such as to be housed in a portion (58, 62) of one of the seats (24, 26) of the caliper body (14) in a manner such as to exert a resilient reaction to a force to remove the pin from the seat of the caliper body (14).

2. A disk brake (10) according to Claim 1 in which the flexible resilient ring (30) is formed by a wire which is wound in a spiral and the ends of which are joined together.

3. A disk brake (10) according to Claim 1 or Claim 2 in which the pin (16) comprises an annular seat (32) for housing the flexible resilient ring (30).

4. A disk brake (10) according to Claim 3 in which the ratio between a portion of the flexible resilient ring (30) projecting from the annular seat (32) and the width of the spiral with its coils free is between 0.35 and 0.45.

5. A disk brake (10) according to one or more of the preceding claims in which the flexible resilient ring (30) of wire wound in a spiral is snap-housed in the portion (58) of the seat of the caliper body (14).

6. A disk brake (10) according to one or more of the preceding claims in which the flexible resilient ring (30) is influenced resiliently by walls of a portion (56) of the seat of the caliper body (14) during the fitting of the pin (16).

7. A disk brake (10) according to one or more of the preceding claims in which the means (28) for restraining the pin (16) on the caliper body (14) comprise further restraining elements mounted on the same end of the pin which houses the flexible resilient ring (30).

8. A disk brake (10) according to one or more of Claims 1 to 6 in which the means (28) for restraining the pin (16) on the caliper body (14) comprise further restraining elements mounted on the end of the pin remote from the end which houses the flexible resilient ring (30).

9. A disk brake (10) according to Claim 7 or Claim 8 in which the further restraining elements comprise "barrel"-shaped resilient elements (60) which engage by friction in one of the seats (24, 26) of the caliper body (14).

10. A disk brake (10) according to Claim 7 or Claim 8 in which the further restraining elements (28) comprise split pins (50) inserted with at least one arm in a transverse hole (36, 49) of the pin (16).

11. A disk brake (10) according to one or more of the preceding claims in which at least one of the seats (24, 26) for housing the ends (20, 22) of the pin (16) comprises at least a first portion (56) and a second portion (58) 'which has diameters larger than the diameter of the first portion (56) and which can house the portion of the pin on which the flexible resilient ring (30) is fitted, the second portion (58) being disposed downstream of the first portion (56), with respect to a direction of fitting (52) of the pin (16) in the caliper body (14).

12. A disk brake (10) according to Claim 11 in which the first portion (56) and the second portion (58) are cylindrical, the second portion having a larger diameter than the first portion.

13. A disk brake (10) according to Claim 11 or Claim 12 in which at least one of the seats (24, 26) comprises an abutment portion (62) against which the flexible resilient ring (30) fitted on the pin (16) reacts.

14. A disk brake (10) according to Claim 13 in which the abutment portion (62) comprises a chamfered surface disposed downstream of the first portion (56), with respect to a direction of fitting of the pin (16) in the caliper body (14).

15. A pin (16) for supporting pads of a disk brake (10), comprising at least one flexible resilient ring (30) which can be fitted on the pin (16) and is made of a wire closed onto itself at least once and extending, wound in a spiral, forming the resilient ring, the spiral having dimensions such as to be housed in a portion (58, 62) of a seat (24, 26) of a caliper body (14) in a manner such as to exert a resilient reaction to a force to remove the pin from the seat of the caliper body (14).

16. A kit for the maintenance of a disk brake (10), comprising a pin having the characteristics according to Claim 15.

17. A caliper body (14) of a disk brake (10) comprising seats (24, 26) for housing at least one pin (16) for supporting pads (27), **characterized in that** at least one of the seats (24, 26) comprises at least a first portion (56) and a second portion (58) which has diameters larger than the diameter of the first portion (56) and which can house a portion of the pin (16) on which a flexible resilient ring (30) is fitted, the second portion (58) being disposed downstream of the first portion (56), with respect to a direction of fitting (52) of the pin (16) in the caliper body (14).

## Patentansprüche

1. Scheibenbremse (10), umfassend eine Scheibe (12), einen Sattelkörper (14), einen Stift (16) zum Haltern von Klötzen (27), wobei der Stift (16) zumindest Enden (20, 22) aufweist, die in Aufnahmen (24, 26) des Sattelkörpers (14) aufgenommen sein können, und Mittel (28) zum Zurückhalten des Stifts (16) auf dem Sattelkörper (14), **dadurch gekennzeichnet, dass** die Rückhaltemittel (28) zumindest einen flexiblen, elastischen Ring (30) umfassen, der auf dem Stift (16) montiert sein kann und durch einen Draht ausgebildet ist, der zumindest ein Mal in sich geschlossen ist und spiralförmig gewickelt verlaufend den elastischen Ring ausbildet, wobei die Spirale Abmessungen aufweist, um in einem Abschnitt (58, 62) einer der Aufnahmen (24, 26) des Sattelkörpers (14) so aufgenommen zu sein, dass sie eine elastische Reaktion auf eine Kraft zum Entfernen des Stifts aus der Aufnahme des Sattelkörpers (14) ausübt.

2. Scheibenbremse (10) gemäß Anspruch 1, wobei der flexible, elastische Ring (30) durch einen Draht ausgebildet ist, der spiralförmig gewickelt ist und dessen Enden miteinander verbunden sind.

3. Scheibenbremse (10) gemäß einem der Ansprüche 1 oder 2, wobei der Stift (16) eine ringförmige Aufnahme (32) zum Aufnehmen des flexiblen, elastischen Rings (30) umfasst.

4. Scheibenbremse (10) gemäß Anspruch 3, wobei das Verhältnis zwischen einem Abschnitt des flexiblen, elastischen Rings (30), der von der ringförmigen Aufnahme (32) vorsteht, und der Breite der Spirale, bei freien Wendeln, zwischen 0,35 und 0,45 ist.

5. Scheibenbremse (10) gemäß einem der vorhergehenden Ansprüche, wobei der flexible, elastische Ring (30) aus spiralförmig gewickeltem Draht eingeschnappt in dem Abschnitt (58) der Aufnahme des Sattelkörpers (14) aufgenommen ist.

6. Scheibenbremse (10) gemäß einem der vorhergehenden Ansprüche, wobei der flexible, elastische Ring (30) beim Montieren des Stifts (16) durch Wände eines Abschnitts (56) der Aufnahme des Sattelkörpers (14) elastisch beeinflusst ist.

7. Scheibenbremse (10) gemäß einem der vorhergehenden Ansprüche, wobei die Mittel (28) zum Zurückhalten des Stifts (16) auf dem Sattelkörper (14) weitere Rückhalteelemente umfassen, die am selben Ende des Stifts angebracht sind, das den flexiblen, elastischen Ring (30) aufnimmt.

8. Scheibenbremse (10) gemäß einem der Ansprüche 1 bis 6, wobei die Mittel (28) zum Zurückhalten des Stifts (16) auf dem Sattelkörper (14) weitere Rückhalteelemente umfassen, die an dem Ende des Stifts angebracht sind, das von dem Ende entfernt liegt, welches den flexiblen, elastischen Ring (30) aufnimmt.

9. Scheibenbremse (10) gemäß Anspruch 7 oder 8, wobei die weiteren Rückhalteelemente "fassförmige" elastische Elemente (60) umfassen, die durch Reibung in eine der Aufnahmen (24, 26) des Sattelkörpers (14) eingreifen.

10. Scheibenbremse (10) gemäß Anspruch 7 oder 8, wobei die weiteren Rückhalteelemente (28) Splinte (50) umfassen, die mit zumindest einem Arm in einem quer verlaufenden Loch (36, 49) des Stifts (16) eingefügt sind.

11. Scheibenbremse (10) gemäß einem der vorhergehenden Ansprüche, wobei zumindest eine der Aufnahmen (24, 26) zum Aufnehmen der Enden (20, 22) des Stifts (16) zumindest einen ersten Abschnitt (56) und einen zweiten Abschnitt (58) umfasst, der größere Durchmesser als der Durchmesser des ersten Abschnitts (56) aufweist und der den Abschnitt des Stifts aufnehmen kann, auf dem der flexible, elastische Ring (30) montiert ist, wobei der zweite Abschnitt (58) bezüglich einer Richtung der Montage (52) des Stifts (16) in dem Sattelkörper (14) dem ersten Abschnitt (56) nachgeordnet ist.

12. Scheibenbremse (10) gemäß Anspruch 11, wobei der erste Abschnitt (56) und der zweite Abschnitt (58) zylinderförmig sind, wobei der zweite Abschnitt einen größeren Durchmesser als der erste Abschnitt aufweist.

13. Scheibenbremse (10) gemäß Anspruch 11 oder 12, wobei zumindest eine der Aufnahmen (24, 26) einen Anschlagabschnitt (62) umfasst, gegen den der flexible, elastische Ring (30), der auf dem Stift (16) montiert ist, reagiert.

14. Scheibenbremse (10) gemäß Anspruch 13, wobei der Anschlagabschnitt (62) eine abgefaste Fläche aufweist, die bezüglich einer Richtung der Montage (52) des Stifts (16) in dem Sattelkörper (14) dem ersten Abschnitt (56) nachgeordnet ist.

15. Stift (16) zum Haltern von Klötzen einer Scheibenbremse (10), umfassend zumindest einen flexiblen, elastischen Ring (30), der auf dem Stift (16) montiert sein kann und aus einem Draht hergestellt ist, der zumindest ein Mal in sich geschlossen ist und spiralförmig gewickelt verlaufend den elastischen Ring ausbildet, wobei die Spirale Abmessungen aufweist, um in einem Abschnitt (58, 62) einer Aufnahme (24, 26) eines Sattelkörpers (14) so aufgenommen zu sein, dass sie eine elastische Reaktion auf eine Kraft zum Entfernen des Stifts aus der Aufnahme des Sattelkörpers (14) ausübt.

16. Ausstattung zur Wartung einer Scheibenbremse (10), umfassend einen Stift mit den Kennzeichen gemäß Anspruch 15.

17. Sattelkörper (14) einer Scheibenbremse (10), umfassend Aufnahmen (24, 26) zum Aufnehmen von zumindest einem Stift (16) zum Haltern von Klötzen (27), **dadurch gekennzeichnet, dass** zumindest eine der Aufnahmen (24, 26) zumindest einen ersten Abschnitt (56) und einen zweiten Abschnitt (58) umfasst, der größere Durchmesser als der Durchmesser des ersten Abschnitts (56) aufweist und der einen Abschnitt des Stifts (16) aufnehmen kann, auf dem ein flexibler, elastischer Ring (30) montiert ist, wobei der zweite Abschnitt (58) bezüglich einer Richtung der Montage (52) des Stifts (16) in dem Sattelkörper (14) dem ersten Abschnitt (56) nachgeordnet ist.

## Revendications

1. Frein à disque (10) comportant un disque (12), un corps d'étrier (14), un axe (16) destiné à supporter des garnitures (27), l'axe (16) ayant au moins des extrémités (20, 22) qui peuvent être reçues dans des sièges (24, 26) du corps d'étrier (14), et des moyens (28) pour retenir l'axe (16) sur le corps d'étrier (14), **caractérisé en ce que** les moyens de retenue (28) comportent au moins un anneau souple élastique (30) qui peut être agencé sur l'axe (16) et qui est formé par un fil fermé sur lui-même au moins une fois et s'étendant, enroulé en spirale, en formant l'anneau élastique, la spirale ayant des dimensions telles qu'elle est reçue dans une partie (58, 62) de l'un des sièges (24, 26) du corps d'étrier (14) de manière à exercer une réaction élastique à une force d'enlèvement de l'axe du siège du corps d'étrier (14).

2. Frein à disque (10) selon la revendication 1, dans lequel l'anneau souple élastique (30) est formé par un fil qui est enroulé selon une spirale et dont les extrémités sont reliées ensemble.

3. Frein à disque (10) selon la revendication 1 ou la revendication 2, dans lequel l'axe (16) comporte un siège annulaire (32) pour recevoir l'anneau souple élastique (30).

4. Frein à disque (10) selon la revendication 3, dans lequel le rapport entre une partie de l'anneau souple élastique (30) faisant saillie à partir du siège annulaire (32) et la largeur de la spirale ayant ses spires libres est compris entre 0,35 et 0,45.

5. Frein à disque (10) selon l'une ou plusieurs des revendications précédentes, dans lequel l'anneau souple élastique (30) constitué d'un fil enroulé selon une spirale est reçu par encliquetage dans la partie (58) du siège de corps d'étrier (14).

6. Frein à disque (10) selon l'une ou plusieurs des revendications précédentes, dans lequel l'anneau souple élastique (30) est influencé de manière élastique par des parois d'une partie (56) du siège du corps d'étrier (14) pendant l'agencement de l'axe (16).

7. Frein à disque (10) selon l'une ou plusieurs des revendications précédentes, dans lequel les moyens (28) pour retenir l'axe (16) sur le corps d'étrier (14) comportent de plus des éléments de retenue montés sur la même extrémité de l'axe que celle qui reçoit l'anneau souple élastique (30).

8. Frein à disque (10) selon l'une ou plusieurs des revendications 1 à 6, dans lequel les moyens (28) pour retenir l'axe (16) sur le corps d'étrier (14) comportent en outre des éléments de retenue montés sur l'extrémité de l'axe éloignée de l'extrémité qui reçoit l'anneau souple élastique (30).

9. Frein à disque (10) selon la revendication 7 ou 8, dans lequel les éléments de retenue supplémentaires comprennent des éléments élastiques en forme de "fût" (60) qui viennent en prise par friction dans l'un des sièges (24, 26) du corps d'étrier (14).

10. Frein à disque (10) selon la revendication 7 ou 8, dans lequel les éléments de retenue supplémentaires (28) comprennent des axes fendus (50) insérés en ayant au moins un bras dans un trou transversal (36, 49) de l'axe (16).

11. Frein à disque (10) selon l'une ou plusieurs des revendications précédentes, dans lequel au moins un des sièges (24, 26) destinés à recevoir les extrémités (20, 22) de l'axe (16) comporte au moins une première partie (56) et une seconde partie (58) qui a un diamètre plus grand que le diamètre de la première partie (56) et qui peut recevoir la partie de l'axe sur laquelle est agencé l'anneau souple élastique (30), la seconde partie (58) étant disposée en aval de la première partie (56), par rapport à la direction d'agencement (52) de l'axe (16) dans le corps d'étrier (14).

12. Frein à disque (10) selon la revendication 11, dans lequel la première partie (56) et la seconde partie (58) sont cylindriques, la seconde partie ayant un diamètre plus grand que la première partie.

13. Frein à disque (10) selon la revendication 11 ou 12, dans lequel au moins un des sièges (24, 26) comporte une partie de butée (62) contre laquelle l'anneau souple élastique (30) agencé sur l'axe (16) réagit.

14. Frein à disque (10) selon la revendication 13, dans lequel la partie de butée (62) comporte une surface chanfreinée disposée en aval de la première partie (56), par rapport à la direction d'agencement de l'axe (16) dans le corps d'étrier (14).

15. Axe (16) pour supporter des garnitures d'un frein à disque (10), comportant au moins un anneau souple élastique (30) qui peut être agencé sur l'axe (16) et est formé par un fil fermé au moins une fois sur lui-même et s'étendant, enroulé selon une spirale, en formant l'anneau élastique, la spirale ayant des dimensions telles qu'elle est reçue dans une partie (58, 62) d'un siège (24, 26) d'un corps d'étrier (14) de manière à exercer une réaction élastique à une force d'enlèvement de l'axe du siège du corps d'étrier (14).

16. Kit d'entretien d'un frein à disque (10), comportant un axe ayant les caractéristiques selon la revendication 15.

17. Corps d'étrier (14) d'un frein à disque (10) comportant des sièges (24, 26) pour recevoir au moins un axe (16) destiné à supporter des garnitures (27), **caractérisé en ce que** au moins un des sièges (24, 26) comporte au moins une première partie (56) et une seconde partie (58) qui a un diamètre plus grand que le diamètre de la première partie (56) et qui peut recevoir une partie de l'axe (16) sur laquelle est agencé un anneau souple élastique (30), la seconde partie (58) étant disposée en aval de la première partie (56), par rapport à la direction d'agencement (52) de l'axe (16) dans le corps d'étrier (14).
